# EUROPEAN PATENT APPLICATION

(11) **EP 0 707 917 A1**
(43) Date of publication of application: **24.04.1996**
(21) Application number: 95306809.5
(22) Date of filing: 27.09.1995
(51) Int. Cl.: B23H 11/00, B23H 7/02, B23H 7/06

(54) **Submerged type wire cutting electrical discharge machining equipment**

(30) Priority: 19.10.1994 JP 253151/94
(71) Applicant: FANUC LTD., Minamitsuru-gun, Yamanashi 401-05 (JP)
(72) Inventor: Okuno, Tetsuya, Fanuc Mansion, Minamitsuru-gun, Yamanashi 401-05 (JP)
(74) Representative: Jackson, Peter Arthur

(57) **Abstract**

Submerged type wire cutting electrical discharge machining equipment including a machining vessel (6) fitted on a bed (1) to support an X-Y table (5) supporting a lower wire guide (4) or a work base (7), resultantly requiring no penetration for the machining vessel and preventing the possibility of machining liquid leaking from the machining vessel.

## Description

This invention relates to an improvement applicable to submerged type wire cutting electrical discharge machining equipment. More specifically, this invention relates to an improvement developed for preventing a machining liquid from leaking from a machining vessel of submerged type wire cutting electrical discharge machining equipment.

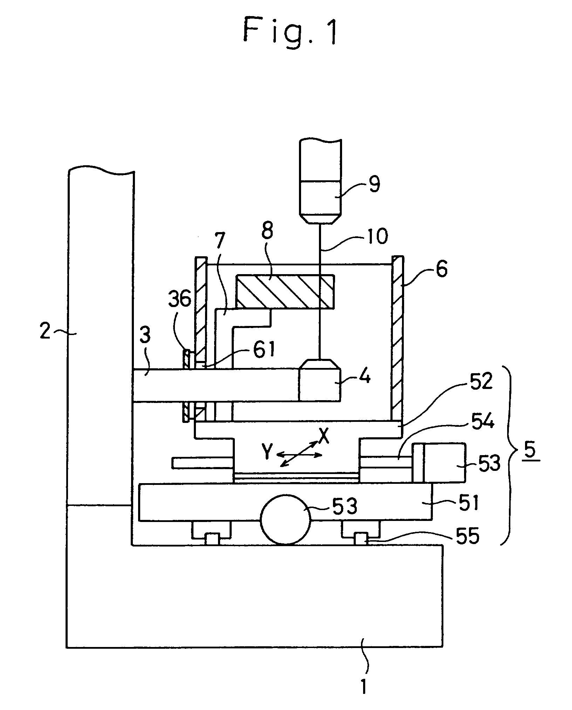

Fig. 1 illustrates a side view of submerged type wire cutting electrical discharge machining equipment available in the prior art. Referring to Fig. 1, an X-Y table 5 is allowed to slide on a bed 1 along a horizontal plane. The X-Y table 5 includes an X saddle 51 and a Y table 52. The X saddle 51 is driven by a ball screw (not shown) powered by a motor 53 to slide in the X direction along a pair of rails 55 which are laid on the bed 1. The Y table 52 is driven by a ball screw 54 powered by a motor 53, to slide in the Y direction along a pair of rails 55 which are laid on the X saddle 51. A machining vessel 6 is mounted on the Y table 52 to contain a machining liquid. The side wall of the machining vessel 6 has a lateral opening 61 to allow an arm 3 which extends from a column 2 to support a lower wire guide 4, to pass through. The lateral opening 61 is closed by a sealing plate 36 having a lateral length which is approximately two times as long as the lateral length of the lateral opening 61. When the Y table 52 moves in the Y direction, the sealing plate 36 moves together with the side wall of the machining vessel 6, to keep the liquid tightness of the machining vessel 6. When the X saddle 51 moves in the X direction, the sealing plate 36 moves together with the arm 3, to keep the liquid tightness of the machining vessel 6. A work base 7 is installed in the machining vessel 6 to support a work 8. An upper wire guide 9 is supported by the column 2 at the location at which the upper wire guide 9 faces the lower wire guide 4. A machining wire electrode 10 extends between the lower wire guide 4 and the upper wire guide 9.

Although the gap remained in the opening 61 between the arm 3 and the side wall of the machining vessel 6 is closed by the sealing plate 36 having the complicated structure described above, it is difficult to sufficiently keep liquid tightness of the machining vessel 6.

Therefore, the object of this invention is to provide submerged type wire cutting electrical discharge machining equipment having a machining vessel which is free from possibility of leakage of the machining liquid.

To achieve the foregoing object, submerged type wire cutting electrical discharge machining equipment in accordance with the first embodiment of this invention is provided a machining vessel placed on a bed to contain a machining liquid, an X-Y table movable in the machining vessel along a horizontal plane, a lower wire guide supported by the X-Y table, an upper wire guide supported by a U axis table which is slidably supported by a V axis saddle which is slidably supported by a column, a wire electrode extending between the lower wire guide and the upper wire guide, and a work base installed in the machining vessel.

To achieve the foregoing object, submerged type wire cutting electrical discharge machining equipment in accordance with the second embodiment of this invention is provided a machining vessel placed on a bed to contain a machining liquid, an X-Y table movable in the machining vessel along a horizontal plane, a work base supported by the X-Y table, a lower wire guide installed in the machining vessel, an upper wire guide supported by a U axis table which is slidably supported by a V axis saddle which is slidably supported by a column, and a wire electrode extending between the lower wire guide and the upper wire guide.

The X-Y table included in either of the foregoing submerged type wire cutting electrical discharge machining equipment is allowed to include an X saddle and a Y table either of which is driven by a ball screw covered by a bellows or both of which are driven by ball screws covered by bellows.

The X-Y table included in either of the foregoing submerged type wire cutting electrical discharge machining equipment is allowed to include an X saddle and a Y table either of which slides along rails installed in a liquid tight air chamber which is soaked in a machining liquid but of which the internal pressure is increased or both of which slide along rails installed in a liquid tight air chamber which is soaked in the machining liquid but of which the internal pressure is increased.

Since no penetration is made for the machining vessel of either of the foregoing submerged type wire cutting electrical discharge machining equipment, there is no possibility for the machining liquid to leak from the machining vessel.

This invention, together with its various features and advantages, can be readily understood from the following more detailed description presented in conjunction with the following drawings, in which :
Fig. 1 is a side view of submerged type wire cutting electrical discharge machining equipment available in the prior art,
Fig. 2 is a side view of submerged type wire cutting electrical discharge machining equipment in accordance with the first embodiment of this invention,
Fig. 3 is a side view of submerged type wire cutting electrical discharge machining equipment in accordance with the second embodiment of this invention,
Fig. 4 is a top plan view of an X-Y table employed for submerged type wire cutting electrical discharge machining equipment in accordance with this invention, and
Fig. 5 is a side view of an X saddle employed for an X-Y table employed for submerged type wire cutting electrical discharge machining equipment in accordance with this invention.

Referring to drawings, a detailed description will be presented below for submerged type wire cutting electrical discharge machining equipment in accordance with this invention.

### First Embodiment

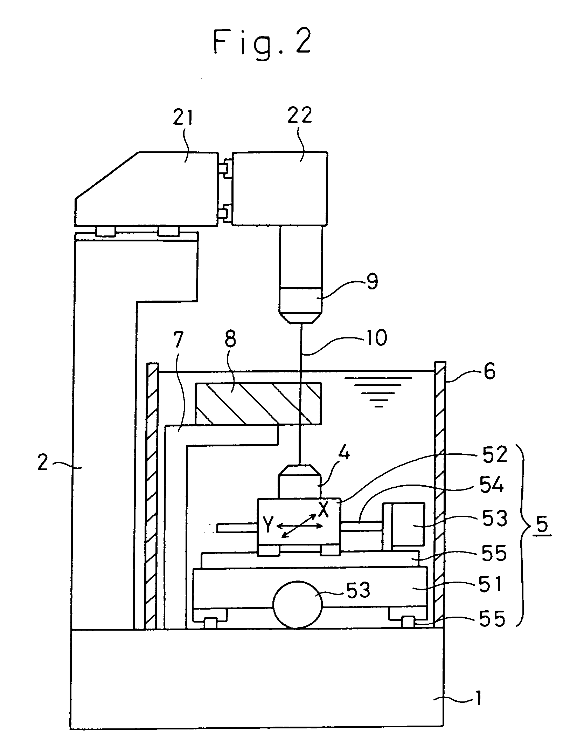

Referring to Fig. 2, a machining vessel 6 is placed on a bed 1 to contain a machining liquid. An X-Y table 5 is allowed to slide on the bottom of the machining vessel 6. The X-Y table 5 includes an X saddle 51 and a Y table 52. The X saddle 51 is driven by a ball screw (not shown) powered by a motor 53, to slide in the X direction along a pair of rails 55 which are laid on the bottom of the machining vessel 6. The Y table 52 is driven by a ball screw 54 powered by a motor 53, to slide in the Y direction along a pair of rails 55 which are laid on the X saddle 51. A lower wire guide 4 is supported by the Y table 52. A work base 7 is installed on the bottom of the machining vessel 6 to support a work 8. An upper wire guide 9 is supported by a U axis table 22 which is slidably supported by a V axis saddle which is slidably supported by a column 2. The U axis table 22 is slidable in the X direction, and the V axis saddle 21 is slidable in the Y direction. A wire electrode 10 is extended between the lower wire guide 4 and the upper wire guide 9. Since the submerged type wire cutting electrical discharge machining equipment having the foregoing structure requires no penetration for the machining vessel 6, there is no possibility for the machining liquid to leak from the machining vessel 6.

### Second Embodiment

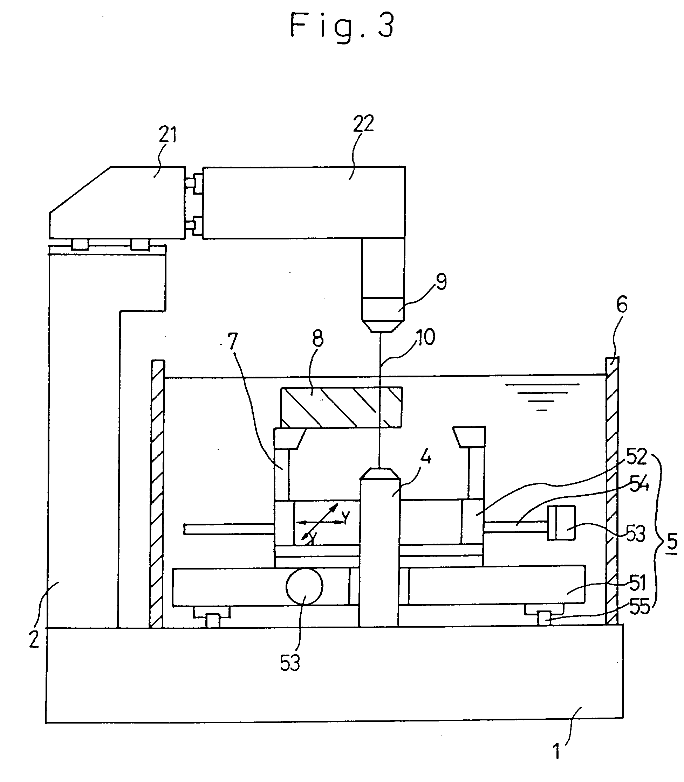

Referring to Fig. 3, a machining vessel 6 is placed on a bed 1 to contain a machining liquid. An X-Y table 5 is allowed to slide on the bottom of the machining vessel 6. The X-Y table 5 includes an X saddle 51 and a Y table 52. The X saddle 51 is driven by a ball screw (not shown) powered by a motor 53, to slide in the X direction along a pair of rails 55 which are laid on the bottom of the machining vessel 6. The Y table 52 is driven by a ball screw 54 powered by a motor 53, to slide in the Y direction along a pair of rails 55 which are laid on the X saddle 51. A work base 7 is supported by the Y table 52 to support a work 8. A lower wire guide 4 is installed on the bottom of the machining vessel 6. An upper wire guide 9 is supported by a U axis table 22 which is slidably supported by a V axis saddle which is slidably supported by a column 2. The U axis table 22 is slidable in the X direction, and the V axis saddle 21 is slidable in the Y direction. A wire electrode 10 is extended between the lower wire guide 4 and the upper wire guide 9. Since the submerged type wire cutting electrical discharge machining equipment having the foregoing structure requires no penetration for the machining vessel 6, there is no possibility for the machining liquid to leak from the machining vessel 6.

### Third Embodiment

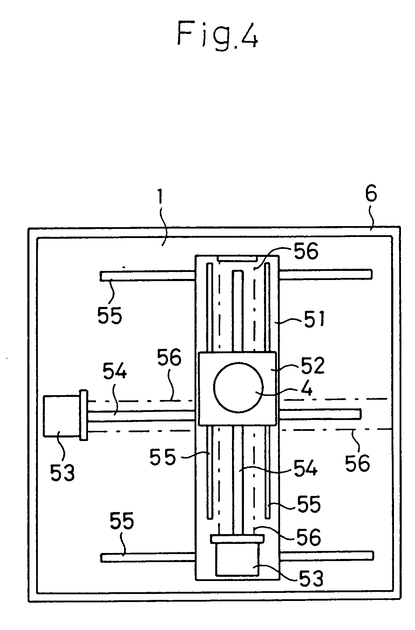

Referring to Fig. 4, an X saddle 51 is allowed to slide on the bottom of a machining vessel 6 along a pair of rails 55 which are laid on the bottom of the machining vessel 6. The X saddle 51 is driven by a ball screw 54 which is covered by a bellows 56, the ball screw 54 being powered by a motor 53. A Y table 52 is allowed to slide on the X saddle 51 along a pair of rails 55 which are laid on the X saddle 51. The Y table 52 is driven by a ball screw 54 which is covered by a bellows 56, the ball screw 54 being powered by a motor 53. Since the ball screws 54 are covered by the bellows, there is no possibility for the ball screws 54 to be soaked in the machining liquid, resultantly becoming free from possibility in which the ball screws 54 are rusted.

### Fourth Embodiment

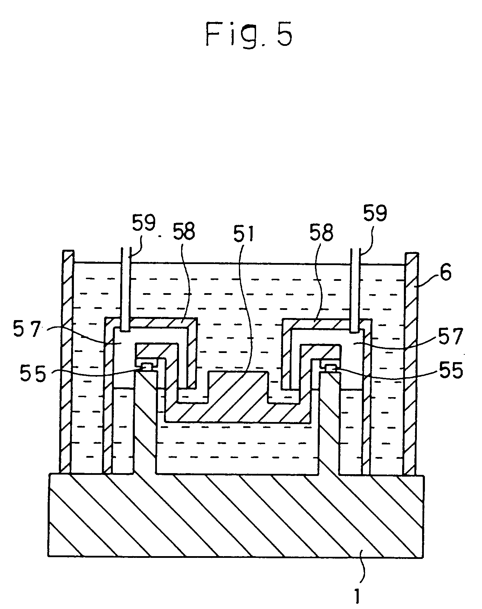

Referring to Fig. 5, an X saddle 51 is allowed to slide along a pair of rails 55 in the direction perpendicular to the page. The portions at which each end of the X saddle 51 contacts the rail 55 are covered by cases 58, remaining hollow spaces (air chambers) 57 between each end of the X saddle 51 and each rail 55. The internal pressure of the hollow spaces (air chambers) 57 is increased by supplying an air pressure through each tube 59.

The foregoing structure including the X saddle 51 is installed in the machining liquid contained in the machining vessel 6. Since the internal pressure of the air chamber 57 is kept higher than 1 ata., however, there is no possibility for the portions at which the X saddle 51 contacts the rails 55 become wet, resultantly being free from possibility in which the rails 55 and the end of the X saddle 51 are rusted.

The above description has clarified that submerged type wire cutting electrical discharge machining equipment having a machining vessel which is free from possibility of leakage of the machining liquid is successfully provided by this invention.

## Claims

1. A submerged type wire cutting electrical discharge machining equipment comprising: a machining vessel (6) placed on a bed (1) to contain a machining liquid; an X-Y table (5) movable in the machining vessel along a horizontal plane; one of a work base (7) and a lower wire guide (4) being supported by the X-Y table; an upper wire guide (9) supported by a U axis table (22) which is slidably supported by a V axis saddle (21) which is slidably supported by a column (2); a wire electrode (10) extending between the lower wire guide and the upper wire guide; and the other of the work base (7) and lower wire guide (4) being installed in machining vessel.

2. An equipment according to claim 1, wherein the X-Y table (5) comprises an X saddle and a Y table (52) either or both of which is/are driven by a respective ball screw (54) covered by a bellows (56).

3. An equipment according to claim 1 or claim 2, wherein the X-Y table (5) comprises an X saddle (51) and a Y table (52) either or both of which slide(s) along a respective set of rails (55) installed in a liquid tight air chamber (57) within the machining liquid but in which the internal pressure is increased.
